# EUROPÄISCHE PATENTANMELDUNG

(11) **EP 3 252 245 A1**
(43) Veröffentlichungstag der Anmeldung: **06.12.2017**
(21) Anmeldenummer: 16172573.4
(22) Anmeldetag: 02.06.2016
(51) Int. Cl.: E04B 1/94

(54) **DICHTUNGSSTREIFEN ZUR ABDICHTUNG VON FUGEN ZWISCHEN BAUELEMENTEN SOWIE VERFAHREN ZUR HERSTELLUNG EINES DICHTUNGSSTREIFENS**

(71) Anmelder: HILTI Aktiengesellschaft, 9494 Schaan (LI)
(72) Erfinder: Förg, Christian, 86862 Lamerdingen (DE)
(74) Vertreter: Hilti Aktiengesellschaft Corporate Intellectual Property

(57) **Zusammenfassung**

Die Erfindung betrifft einen Dichtungsstreifen (1) zum Abdichten einer Fuge (11) zwischen zwei Bauelementen (12), insbesondere zwischen Gebäudebauteilen, wobei sich der Dichtungsstreifen (1) in einer Längsrichtung (L) erstreckt und im Querschnittsprofil zwei Befestigungsabschnitte (2) aufweist, zwischen denen zwei separate benachbarte Dichtabschnitte (3) vorgesehen sind, die durch eine in Längsrichtung (L) verlaufende Soll-Biegestelle (4) voneinander getrennt sind, wobei die Dichtabschnitte (3) jeweils eine Kammer (6) aufweisen, die mit einem komprimierbaren Schaum gefüllt ist, wobei der Dichtungsstreifen (1) aus einem Folienmaterial (9) ausgebildet ist.

## Beschreibung

### Technisches Gebiet

Die Erfindung betrifft Maßnahmen zum Abdichten von Fugen zwischen zwei Bauelementen, insbesondere Gebäudebauteilen, wie beispielsweise Gebäudedecken, -wänden, Trockenbauwänden oder dergleichen.

### Technischer Hintergrund

Beim Aufbau bzw. Montage von Gebäudebauteilen werden diese in der Regel nicht unmittelbar aneinander angesetzt, sondern es verbleibt eine Fuge, um relative Bewegungen zwischen den Gebäudebauteilen aufnehmen bzw. ausgleichen zu können. Um im Brandfall den Durchtritt von Brandgasen oder Flammen durch die Fuge zu vermeiden, wird diese in der Regel durch geeignete Maßnahmen abgedichtet. Die Abdichtung kann beispielsweise mit einem Dichtungsstreifen vorgenommen werden, der ganz oder teilweise aus einem intumeszierenden Material besteht.

Aus der Druckschrift US 2015/068139 A1 ist ein Verbindungssystem mit einem sich ausdehnenden Schaumstreifen bekannt, in den ein feuerbeständiges Material eingebettet ist.

Aus der Druckschrift GB 2376706 ist ein intumeszierender Streifen zum Anbringen an einer flachen Oberfläche mit zwei in Längsrichtung verlaufenden, voneinander beabstandeten Kanälen in einem extrudierten Trägermaterial bekannt, in denen jeweils intumeszierendes Material eingebracht ist.

Aus der Druckschrift US 6,112,488 A ist ein Dichtungsstreifen aus einem feuerbeständigem intumeszierenden Dichtungsmaterial bekannt, wobei eine der Hauptflächen an einer feuerbeständigen Materialtrennschicht angebracht ist und eine weitere der Hauptflächen zum Anbringen an einem Gebäudeverbindungsteil ausgebildet ist. Eine der Hauptflächen ist mit einem Klebstoff versehen, und mindestens eine der feuerbeständigen Trennschichten ist mit einem Teil einer der Hauptflächen des Dichtungsstreifens verbunden.

Aus der Druckschrift DE 23 517 23 ist ein dichter Belag einer Dehnungsfuge bekannt, der ein feuerabsperrendes, elastisches und bleibendes Teil, ein wasserdichtes Teil und eine obere gasundurchlässige Fugenbedeckung aufweist.

Die Druckschrift DE 20 2012 104 826 U1 beschreibt ein Fugendichtband zur Abdichtung einer Bauwerksfuge zwischen zwei Bauteilen. Das Dichtband weist einen Korpus aus einem rückstellfähigen Weichschaumstoffmaterial sowie zwei gegenüberliegende Breitseiten des Dichtbandes zur Anlage an die beiden durch die beiden Bauteile ausgebildeten Fugenflanken auf. Das Fugendichtband weist eine Materiallage eines gegen äußere Umgebungseinflüsse wirkenden, unter Einwirkung der Umgebungseinflüsse sein Volumen stark vergrößernden Material auf. Das Fugendichtband weist somit einen mehrlagigen Aufbau auf und die Fixierung erfolgt innerhalb der Fuge.

Die Druckschrift GB 2472402 offenbart eine Rauch- und Feuerdichtungsanordnung mit einer Anordnung von Dichtungselementen auf einer Befestigungsbasis.

Obige Dichtungsstreifen weisen jedoch Nachteile bei deren Montage und/oder deren Bewegungsaufnahme auf, und es ist daher wünschenswert, einen verbesserten Dichtungsstreifen zur Verfügung zu stellen, der einfacher handhabbar ist und eine hohe Bewegungsaufnahme ermöglicht. Weiterhin ist der Herstellungsprozess der Dichtungsstreifen aus dem Stand der Technik häufig aufwendig, und es ist daher eine weitere Aufgabe der vorliegenden Erfindung, ein verbessertes Verfahren zur Herstellung eines solchen Dichtungsstreifens zur Verfügung zu stellen.

### Beschreibung der Erfindung

Diese Aufgaben werden durch den Dichtungsstreifen zum Abdichten von Fugen zwischen Bauelementen nach Anspruch 1 sowie die Verfahren zur Herstellung von Dichtungsstreifen gemäß den nebengeordneten Ansprüchen gelöst.

Weitere Ausgestaltungen sind in den abhängigen Ansprüchen angegeben.

Gemäß einem ersten Aspekt ist ein Dichtungsstreifen zum Abdichten einer Fuge zwischen zwei Bauelementen vorgesehen, insbesondere zwischen Gebäudebauteilen, wobei sich der Dichtungsstreifen in einer Längsrichtung erstreckt und im Querschnittsprofil zwei Befestigungsabschnitte aufweist, zwischen denen zwei separate benachbarte Dichtabschnitte vorgesehen sind, die durch eine in Längsrichtung verlaufende Sollbiegestelle voneinander getrennt sind, wobei die Dichtabschnitte jeweils eine Kammer aufweisen, die mit einem komprimierbaren Schaum gefüllt ist, wobei der Dichtungsstreifen aus einem Folienmaterial ausgebildet ist.

Eine Idee des obigen Dichtungsstreifens besteht darin, diesen als elastisches bandförmiges Dichtungselement vorzusehen, das zwei sich in Längsrichtung erstreckende, voneinander getrennte, einander unmittelbar benachbarte Dichtabschnitte aufweist, die mit einem komprimierbaren Schaum gefüllt sind und von einem flexiblen Folienmaterial umgeben sind. Zwischen den Dichtabschnitten befindet sich eine in Längsrichtung verlaufende Soll-Biegestelle, an der die Dichtabschnitte zueinander verschwenkbar sind. So können die Dichtabschnitte beim Einsetzen in eine Fuge zwischen zwei Bauelementen aufeinander geklappt werden und aufgrund des flexiblen Folienmaterials dabei einfach verformt werden, so dass sich die Dichtabschnitte einfach dem Fugenquerschnitt anpassen.

Durch das Trennen der Dichtabschnitte lediglich durch eine Soll-Biegestelle wird die Fuge im Wesentlichen über ihre Gesamtbreite vollständig verschlossen, ohne dass eine nennenswerte Schwachstelle ausgebildet wird. Durch die Kombination der Soll-Biegestelle zwischen den Dichtabschnitten und der Ummantelung des komprimierbaren Schaums mit dem Folienmaterial kann der Dichtungsstreifen auch Änderungen der Breite der Fuge in einem großen Bereich aufnehmen, ohne dass es zu Undichtigkeiten kommt.

Weiterhin kann der Schaum einen elastischen Polyurethan-Schaum aufweisen und insbesondere eine Dichte von 40 - 400 kg/m³ haben. Ein Schaummaterial für die Dichtabschnitte mit diesen Eigenschaften hat sich im Sinne der Handhabbarkeit und Abdichtungseigenschaften als vorteilhaft herausgestellt. Das Schaummaterial kann auch ein offen- oder geschlossenzelliges Schaummaterial sein oder ein Schaummaterial auf Silikonbasis.

Es kann vorgesehen sein, dass die Dichtabschnitte unmittelbar aneinander angrenzend ausgebildet sind. Dadurch wird nach dem Einbringen in die Fuge auch eine zuverlässige Abdichtung im Bereich zwischen den Dichtabschnitten erreicht.

Gemäß einer Ausführungsform können die Dichtabschnitte hin zu der Sollbiegestelle sich verjüngend ausgebildet sein, um eine Ausnehmung, insbesondere eine keilförmige Ausnehmung zwischen den Dichtabschnitten auszubilden. Dies verringert die Stauchung des elastischen Materials im Bereich der SollBiegestelle bei starkem Zusammenklappen entlang der Soll-Biegestelle.

Weiterhin können die Dichtabschnitte nur über eine Hauptfläche des Dichtungsstreifens hervorstehen.

Insbesondere können die Befestigungsabschnitte auf derjenigen Seite des Dichtungsstreifens, auf der auch die Dichtabschnitte hervorstehen, mit Klebeflächen, insbesondere mit Hotmelt- oder Acrylatklebstoff, versehen sein. Die bezüglich der Dichtabschnitte außenliegenden Befestigungsabschnitte können also mit einer Klebefläche versehen sein, um den Dichtungsstreifen an außerhalb der Fuge liegenden Flächen der Bauelemente, zwischen denen die Brandschutzfuge ausgebildet ist, aufzukleben, so dass die Dichtabschnitte in die Fuge hineinragen und diese vollständig verschließen.

Es kann vorgesehen sein, dass das Folienmaterial mit einer strukturellen Verstärkung versehen ist, die insbesondere als aufgebrachte oder eingebettete Gitter- oder Gewebestruktur ausgebildet ist.

Es kann auch vorgesehen sein, dass das Folienmaterial den Dichtungsstreifen vollumfänglich umhüllt.

Gemäß einem weiteren Aspekt ist eine Anordnung vorgesehen, umfassend:
- der obige Dichtungsstreifen;
- eine Fuge zwischen zwei Bauelementen,
wobei die Befestigungsabschnitte des Dichtungsstreifens auf sich an die Fuge anschließende Randbereiche der Bauelemente aufgeklebt sind, so dass die Dichtabschnitte in einem zumindest teilweise um die Sollbiegestelle zusammengeklappten Zustand in die Fuge hineinragen.

Gemäß einem weiteren Aspekt ist ein Verfahren zur Herstellung eines Dichtungsstreifens, insbesondere des obigen Dichtungsstreifens, vorgesehen, mit folgenden Schritten:
- Bereitstellen eines länglichen Folienbands;
- Einbringen von flüssigem, nicht ausgehärteten Schaummaterial auf das Folienband;
- Umbiegen des Folienbands quer zur Längsrichtung des Folienbands, um einen Folienschlauch auszubilden; und
- Pressen des Folienschlauchs mit einem Pressstempel, so dass an den Befestigungsabschnitten und an der Sollbiegestelle übereinanderliegende Folienabschnitte miteinander verbunden, insbesondere verschweißt werden und sich das Schaummaterial vor dem Aushärten in benachbarten Kammern sammelt, um die Dichtabschnitte auszubilden.

Eine Idee des obigen Herstellungsverfahrens besteht darin, einen Folienschlauch vorzusehen, der mit einer Menge an noch flüssigem Schaummaterial gefüllt ist. Durch eine Prägung mit einem Formstempel werden Randbereiche des Querschnittprofils des Folienschlauches zusammengepresst, so dass kein bzw. nur eine minimale Menge Schaum zwischen den zusammengepressten Teilen des Folienschlauchs verbleibt. Diese minimale Menge des Schaumes kann vorteilhafterweise als Klebstoff zum Verkleben der Randbereiche des Querschnittprofils des Folienschlauches dienen. In diesem Fall verhindert der Formstempel das Schäumen in den Randbereichen. Weiterhin wird mit Hilfe eines stegförmigen Prägeabschnitts die Schaumfüllung entlang der Längsrichtung separiert, so dass die Soll-Biegestelle in der Mitte des Dichtungsprofils des Dichtungsstreifens durch Aufeinanderkleben der gegenüberliegenden Abschnitte des Folienschlauchs entsteht. Zwischen den Randbereichen und der Soll-Biegestelle bilden sich so Kammern aus, in denen das flüssige Schaummaterial aufschäumt und aushärtet. Auf diese Weise kann ein Dichtungsstreifen mit einem Dichtungsprofil wie oben beschrieben ausgebildet werden, der an den Befestigungsabschnitten lediglich mit der Klebefläche versehen werden muss, um den Dichtungsstreifen auszubilden.

Weiterhin kann an den Befestigungsabschnitten zwischen den Folienabschnitten eine Schicht des Schaummaterials verbleiben, um die Befestigungsabschnitte zu verstärken.

Gemäß einem weiteren Aspekt ist ein Verfahren zur Herstellung eines Dichtungsstreifens, insbesondere des obigen Dichtungsstreifens, vorgesehen, mit folgenden Schritten:
- Bereitstellen eines länglichen ersten Folienbands in einem Formteil mit zueinander benachbarten Vertiefungen;
- Aufbringen von flüssigem, nicht ausgehärteten Schaummaterial in die Vertiefungen des ersten Folienbandes;
- Anbringen eines zweiten Folienbands auf das erste Folienband, so dass die Folienbänder Befestigungsabschnitten und an einer Sollbiegestelle miteinander verbunden werden und das Schaummaterial in durch die Vertiefungen gebildeten Kammern eingeschlossen wird.

Eine Idee des obigen alternativen Herstellungsverfahrens besteht darin, zwei Folien miteinander zu verbinden, wobei eine erste Folie in ein Formprofil aufgelegt wird, das zwei Vertiefungen aufweist, die miteinander lediglich durch einen Steg getrennt sind. Nun wird in die so gebildeten Mulden flüssiges Schaummaterial eingebracht und eine weitere Folie so auf die erste Folie verbunden, dass diese an den Befestigungsabschnitten und den Mittenabschnitt fest miteinander verbunden sind. Auf diese Weise werden in den Mulden die Kammern ausgebildet, in denen sich das flüssige Schaummaterial aufschäumt und verfestigt.

Die obigen Herstellungsverfahren eines Dichtungsstreifens können auch im Endlos-Verfahren durchgeführt werden, insbesondere können diese auf einem Band erfolgen, das die Form des Pressstempels hat.

### Kurze Beschreibung der Zeichnungen

Ausführungsformen werden nachfolgend anhand der beigefügten Zeichnungen näher erläutert. Es zeigen:
- Figur 1: eine schematische Darstellung eines Querschnittsprofils eines nicht verbauten Dichtungsstreifens gemäß einer Ausführungsform;
- Figuren 2a und 2b: in Fugen unterschiedlicher Breite eingebrachte Dichtungsstreifen;
- Figuren 3a bis 3c: Verfahrenszustände zur Herstellung des Dichtungsstreifens gemäß einer ersten Ausführungsform; und
- Figuren 4a bis 4c: Verfahrenszustände eines Verfahrens zur Herstellung eines Dichtungsstreifens gemäß einer weiteren Ausführungsform.

### Beschreibung der Ausführungsformen

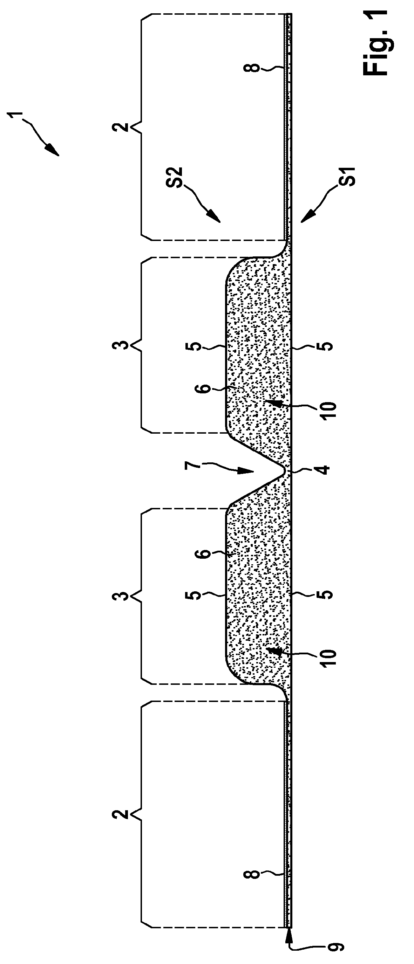

In Figur 1 ist ein Querschnittsprofil eines länglichen Dichtungsstreifens 1 dargestellt. Das Querschnittsprofil weist zwei flache äußere Befestigungsabschnitte 2 auf, zwischen denen zwei dickere Dichtabschnitte 3 angeordnet sind. Die Dichtabschnitte 3 sind durch eine Sollbiegestelle 4 mit geringer Dicke voneinander getrennt.

Die Befestigungsabschnitte 2 sind im Wesentlichen aus einem dünnen flexiblen Material oder Materialverbund ausgebildet. So können die Befestigungsabschnitte 2 sowohl in Längsrichtung als auch in Querrichtung des Dichtungsstreifens 1 an verschiedenen Konturen von Bauelementen, wie beispielsweise Gebäudebauteile, insbesondere Wände, Decken und dergleichen, angepasst werden. Insgesamt ist der Dichtungsstreifen 1 aus einem Folienmaterial 9 ausgebildet, das zur strukturellen Verstärkung mit einem Gitter oder Gewebe oder einer sonstigen Verstärkungsstruktur versehen bzw. armiert sein kann.

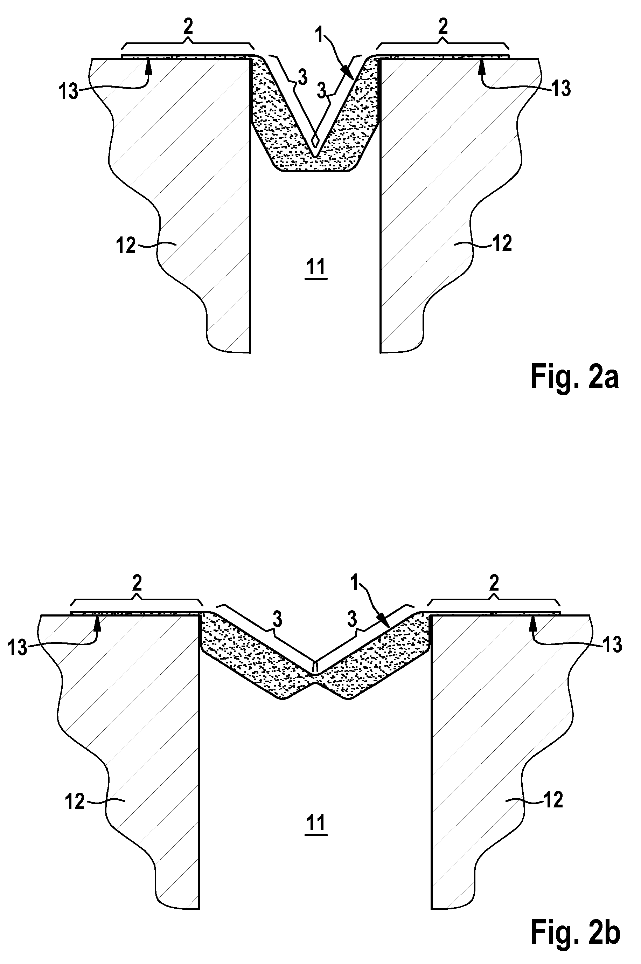

Figuren 2a und 2b zeigen jeweils eine Fuge 11 zwischen zwei Bauelementen 12, in der der Dichtungsstreifen 1 angebracht ist. Wie in den Figuren 2a und 2b gezeigt, wird der Dichtungsstreifen 1 so in bzw. über einer Fuge 11 angebracht, dass die Aufnahme von Relativbewegungen zwischen den zwei voneinander beabstandeten Bauelementen 12 nicht behindert wird. Dabei werden die Befestigungsabschnitte 2 an Randbereichen 13 der Bauelemente 12, die an die Fuge 11 angrenzen, befestigt.

Die Dichtabschnitte 3 sind jeweils als zwischen zwei Folienabschnitten 5 ausgebildete Kammern 6 ausgebildet (Fig.1), wobei die Kammern 6 mit einem Schaum 10 gefüllt sind. Der Schaum 10 ist flexibel, elastisch und leicht komprimierbar und vorzugsweise mit einem feuerbeständigen und/oder intumeszierenden Material versehen oder aus diesem gebildet. Der Schaum 10 kann einen Polyurethan-Schaum aufweisen und insbesondere eine Dichte zwischen 40 - 400 kg/m³ haben.

Zur Soll-Biegestelle 4 hin können die Querschnitte der Kammern 6 eine sich verjüngende Breite aufweisen, so dass die Soll-Biegestelle 4 durch eine zwischen den Dichtabschnitten 3 ausgebildete Ausnehmung 7 mit etwa keilförmigem Querschnitt ausgebildet ist. Das Querschnittprofil des Dichtungsstreifens 1 ist im Wesentlichen an einer ersten Hauptseite S1 eben ausgebildet, so dass die Kammern 6 der Dichtungsabschnitte 3 auf einer gegenüberliegenden zweiten Hauptseite S2 über die Fläche der Befestigungsabschnitte 2 auf der zweiten Hauptseite S2 hervorstehen.

Die Befestigungsabschnitte 2 können auf der zweiten Hauptseite S2 mit Klebeflächen 8 versehen sein, mit der der Dichtungsstreifen 1 auf die entsprechenden Randbereiche 13 der Bauelemente 12 aufgeklebt werden kann, so dass die Dichtungsabschnitte 3, wie in den Figuren 2a und 2b gezeigt, in eine dazwischenliegende Fuge 11 hineinragen. Man erkennt, dass die Randbereiche 2 des Dichtungsstreifens 1 so an die Randbereiche 13 der Bauelemente 12 aufgeklebt werden, dass die Übergänge zwischen den Befestigungsabschnitten 2 und dem zugeordneten Dichtabschnitt 3 an den die Fuge 11 begrenzenden Rändern der Bauelemente 12 angeordnet sind. Auf diese Weise sind die Klebeflächen 8 vollständig auf den Randbereichen 13 der Bauelemente 12 aufgeklebt, und die Dichtabschnitte 3 ragen vollständig in die Fuge 11 zwischen den Bauelementen 12 hinein. Bei einem sich vergrößernden Abstand zwischen den Bauelementen 12 bzw. einer sich vergrößernden Breite der Fuge 11, wie in Figur 2b dargestellt, können sich die Dichtungsabschnitte 3 aufspreizen, ohne dass die Fuge 11 dadurch undicht wird.

Das Folienmaterial 9 des Dichtungsstreifens 1 ist vorzugsweise so gewählt, dass es eine gute Haftung mit dem Schaum 10 aufweist. Zumindest die Oberfläche der ersten Hauptseite S1 sollte so beschaffen sein, dass sie mit herkömmlicher Wandfarbe überstrichen werden kann.

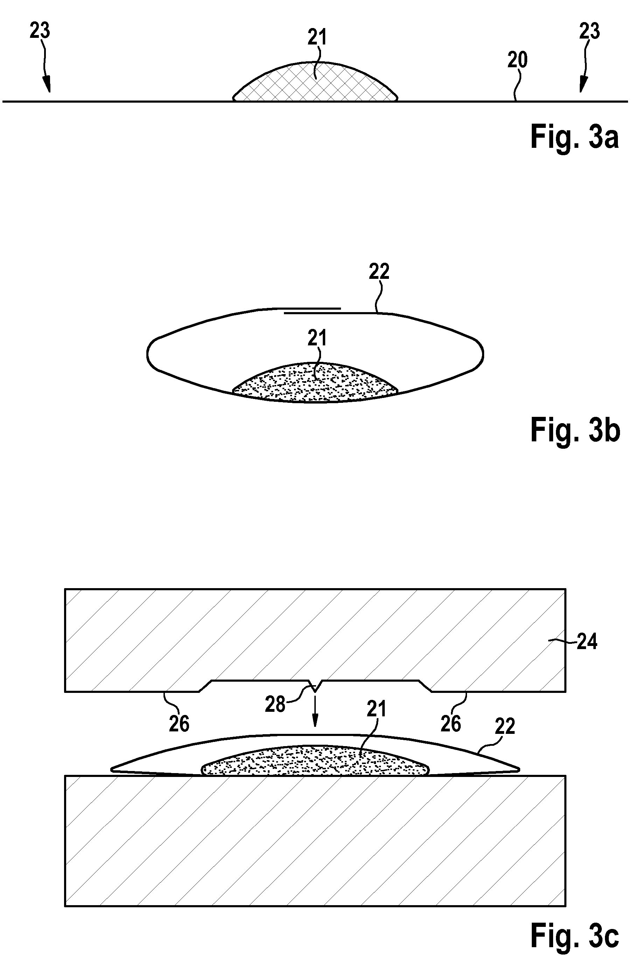

In den Figuren 3a bis 3c sind Verfahrenszustände zur Herstellung eines Dichtungsstreifens 1 entsprechend der Ausführungsform der Figur 1 dargestellt. Das Verfahren geht aus von einem z.B. durch Einwirkung von Wärme verschweißbaren Folienband 20, das mit sich selbst verschweißbar ist. Das Folienband 20 kann aus folgenden Folienmaterialien ausgebildet sein: Polyethylen, Polypropylen, Polyvinylchlorid, Polystyrol, Polyester, Polyamid, Polycarbonat, Verbundmaterialien, oder ähnlichen Kunststoffmaterialien. Denkbar ist auch, dass das Folienband mit einer Gitter- oder Gewebestruktur versehen ist, wie einer Struktur aus Glas, Faser, Textil oder ähnlichem.

Wie in der Querschnittsdarstellung der Figur 3a gezeigt, wird etwa auf einen Mittenbereich des Folienbands 20, der sich entlang der Längsrichtung des Folienbands 20 erstreckt, ein flüssiges Schaummaterial 21 aufgebracht, das zunächst noch nicht aufgeschäumt und verfestigt ist. Vor dem Aufschäumen und Verfestigen des Schaummaterials 21 werden die Bereiche des Folienbands 20 zu beiden Seiten des aufgebrachten Schaummaterials 21 beidseitig über das flüssige Schaummaterial 21 umgebogen bzw. umgeklappt. Dabei überlappen sich die Seitenränder 23 des Folienbandes 20, so dass ein sich in Längsrichtung L erstreckender Folienschlauch 22 mit einem darin eingebrachten Streifen aus flüssigem Schaummaterial 21 ausgebildet wird. Dies ist in der Querschnittsdarstellung der Figur 3b gezeigt.

In einer alternativen Ausführungsform wird das flüssige Schaummaterial 21 auf einen Bereich der Folienbandes 20 aufgebracht, der eine sich in Längsrichtung erstreckende Linie mit einem Abstand von etwa einem Viertel seiner Breite von einem Seitenrand 23 umfasst. Der verbleibende größere Abschnitt des Folienbands 20 seitlich des flüssigen Schaummaterials 21 wird vor dem Aufschäumen und Verfestigen einseitig über das flüssige Schaummaterial 21 umgebogen bzw. umgeklappt, so dass die Seitenränder 23 etwa übereinander zu liegen kommen. Dadurch kann ebenfalls ein sich in Längsrichtung erstreckender Folienschlauch 22 mit einem darin eingebrachten Streifen aus flüssigem Schaummaterial 21 ausgebildet werden.

Nach dem Umklappen zum Ausbilden des Folienschlauches 22 wird dieser einem Formstempel 24 zugeführt, der den Folienschlauch 22 abschnittsweise zusammendrückt und z.B. durch Hitzeeinwirkung dort miteinander verschweißt, wo gegenüberliegende Folienbereiche aneinander anliegen. Der Formstempel 24 ist in Figur 3c dargestellt und weist beispielsweise drei Pressbereiche auf, die die beiden Befestigungsabschnitte 2 des Dichtungsstreifens 1 und die SollBiegestelle 4 des Dichtungsstreifens 1 ausbilden bzw. definieren.

Der Folienschlauch 22 wird für diesen Arbeitsschritt so zu dem Formstempel 24 angeordnet, dass der Streifen des Schaummaterials 21 etwa mittig zu dem stegförmigen Pressbereich 28 angeordnet ist, der zur Ausbildung der SollBiegestelle 4 dient. Dadurch drückt der im wesentlichen stegförmige Pressbereich 28 für die Soll-Biegestelle 4 etwa in die Mitte des länglichen Folienschlauchs 22, um so das noch flüssige Schaummaterial 21 etwa hälftig aufzuteilen. Durch das Zusammenpressen verbreitert sich der Folienschlauch 22, so die seitlichen Pressbereiche 26 des Formstempels 24, die die Randbereiche ausbilden, einen oberen und unteren Abschnitt des Folienschlauches 22 aufeinanderpressen, miteinander verbinden und dadurch die Befestigungsabschnitte 2 des Dichtungsstreifens 1 ausbilden. Zwischen den Pressbereichen 26 für die Befestigungsabschnitte 2 weist der Formstempel 24 zwei, beidseitig des Pressbereichs für die Soll-Biegestelle 4 angeordnete Vertiefungen auf, so dass beim Pressvorgang sich im Bereich der Vertiefungen das Schaummaterial sammelt und die Dichtabschnitte 3 ausbildet. An den Dichtabschnitten 3 liegen die Folienabschnitte nicht aneinander, sondern bilden jeweils die Kammer 6 aus, in der jeweils etwa eine Hälfte des Schaummaterials 21 aufgenommen wird.

Beim Pressen werden an den Pressbereichen 26 obere und untere Folienabschnitte aufeinandergedrückt und z.B. durch die Hitzeeinwirkung miteinander verschweißt. Auf diese Weise werden die Kammern 6 voneinander getrennt und die dazwischenliegende Soll-Biegestelle 4 ausgebildet.

Alternativ kann zwischen den Randbereichen beim Zusammenpressen eine dünne Schicht des Schaummaterials verbleiben, um dadurch die Stabilität der Befestigungsabschnitte 2 zu verbessern. Dies kann erreicht werden, indem die Menge des eingebrachten Schaummaterials 21 erhöht wird, so dass beim Verpressen ein Teil des flüssigen Schaummaterials 21 unter die Pressbereiche 26 gedrückt wird.

Die Befestigungsabschnitte 2 können nach dem Verpressen mit einer Klebeschicht bzw. mit einer Klebefläche 8, insbesondere einem Klebeband, auf der Seite, auf der die Kammern 6 mit dem Schaummaterial 21 hervorstehen, versehen werden, so dass bei der Montage des Dichtungsstreifens 1 die Befestigungsabschnitte 2 an die Randbereiche 13 der Bauelemente 12 geklebt werden können.

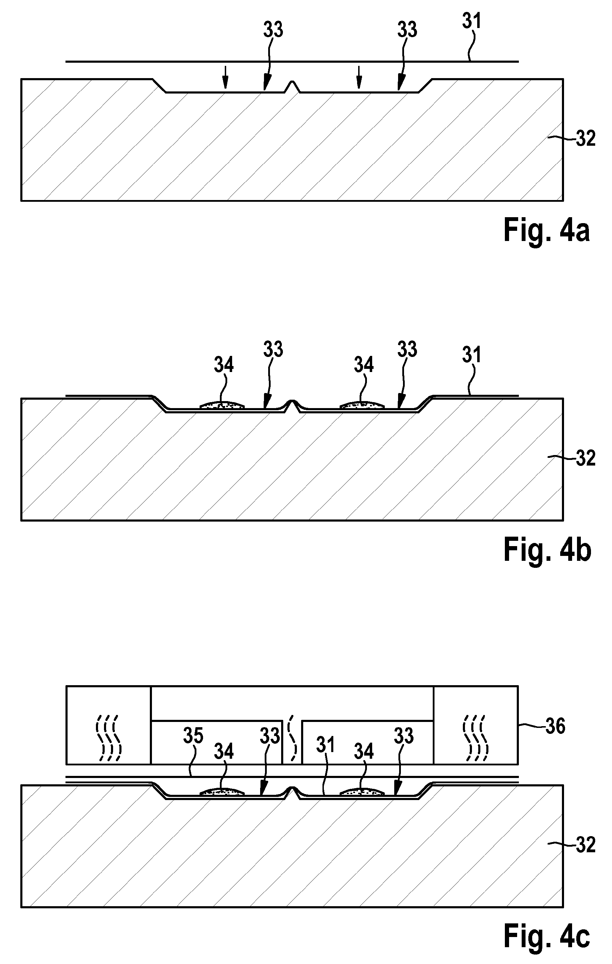

Die Figuren 4a bis 4c zeigen Verfahrenszustände eines weiteren möglichen Herstellungsverfahrens in Querschnittsdarstellungen. Dazu wird, wie in Figur 4a gezeigt, ein erstes Folienband 31 auf einen Formstempel 32 aufgelegt, der im Bereich der auszubildenden Dichtabschnitte 3 zwei Vertiefungen 33 aufweist. Um das erste Folienband 31 in die Vertiefungen 33 einzubringen, kann dieses z.B. mit Hilfe eines Unterdrucks in diese eingesaugt werden.

Nun werden, wie in Figur 4b gezeigt, die beiden Vertiefungen 33 jeweils mit einem in Längsrichtung verlaufenden Streifen eines flüssigen Schaummaterials 34 versehen und anschließend ein zweites Folienband (nicht gezeigt in Fig. 4b) ebenfalls in Längsrichtung auf das erste Folienband 31 angebracht, so dass im Bereich der Vertiefungen 33 abgeschlossene Kammern 6 ausgebildet werden, in denen das flüssige Schaummaterial 34 aufschäumt und verfestigt.

Wie in Figur 4c gezeigt, wird durch Hitzeeinwirkung, z.B. mithilfe einer beheizten Pressstempels 36, das erste Folienband 31 mit dem zweiten Folienband 35 im Bereich der auszubildenden Befestigungsabschnitte 2 und im Bereich der auszubildenden Soll-Biegestelle 4 miteinander verschweißt, um den Dichtungsstreifen 1 auszubilden, wie er als Beispiel in Figur 1 dargestellt ist.

## Patentansprüche

1. Dichtungsstreifen (1) zum Abdichten einer Fuge (11) zwischen zwei Bauelementen (12), insbesondere zwischen Gebäudebauteilen, wobei sich der Dichtungsstreifen (1) in einer Längsrichtung (L) erstreckt und im Querschnittsprofil zwei Befestigungsabschnitte (2) aufweist, zwischen denen zwei separate benachbarte Dichtabschnitte (3) vorgesehen sind, die durch eine in Längsrichtung (L) verlaufende Soll-Biegestelle (4) voneinander getrennt sind,
wobei die Dichtabschnitte (3) jeweils eine Kammer (6) aufweisen, die mit einem komprimierbaren Schaum gefüllt ist,
wobei der Dichtungsstreifen (1) aus einem Folienmaterial (9) ausgebildet ist.

2. Dichtungsstreifen (1) nach Anspruch 1, wobei der Schaum einen elastischen Polyurethan Schaum aufweist und insbesondere eine Dichte von 40 - 400kg/m³ aufweist.

3. Dichtungsstreifen (1) nach Anspruch 1 oder 2, wobei die Dichtabschnitte (3) unmittelbar aneinander angrenzend ausgebildet sind.

4. Dichtungsstreifen (1) nach einem der Ansprüche 1 bis 3, wobei die Dichtabschnitte (3) hin zu der Soll-Biegestelle (4) sich verjüngend ausgebildet sind, um eine Ausnehmung (7), insbesondere eine keilförmige Ausnehmung zwischen den Dichtabschnitten (3) auszubilden.

5. Dichtungsstreifen (1) nach einem der Ansprüche 1 bis 4, wobei die Dichtabschnitte (3) nur an einer Hauptfläche (S1, S2) des Dichtungsstreifens (1) hervorstehen.

6. Dichtungsstreifen (1) nach Anspruch 5, wobei die Befestigungsabschnitte (2) auf derjenigen Seite des Dichtungsstreifens (1), auf der auch die Dichtabschnitte (3) hervorstehen, mit Klebeflächen (8), insbesondere mit Hotmelt- oder Acrylatklebstoff, versehen sind.

7. Dichtungsstreifen (1) nach einem der Ansprüche 1 bis 6, wobei das Folienmaterial (9) mit einer strukturellen Verstärkung versehen ist, die insbesondere als aufgebrachte oder eingebettete Gitter- oder Gewebestruktur ausgebildet ist.

8. Dichtungsstreifen (1) nach einem der Ansprüche 1 bis 7, wobei das Folienmaterial (9) den Dichtungsstreifen vollumfänglich umhüllt.

9. Anordnung umfassend:
- einen Dichtungsstreifen (1) nach einem der Ansprüche 1 bis 8, und
- eine Fuge (11) zwischen zwei Bauelementen (12),
wobei die Befestigungsabschnitte (2) des Dichtungsstreifens (1) auf sich an die Fuge (11) anschließende Randbereiche der Bauelemente (12) aufgeklebt sind, so dass die Dichtabschnitte (3) in einem zumindest teilweise um die Soll-Biegestelle (7) zusammengeklappten Zustand in die Fuge (11) hineinragen.

10. Verfahren zur Herstellung eines Dichtungsstreifens (1), insbesondere eines Dichtungsstreifens (1) nach einem der Ansprüche 1 bis 7, mit folgenden Schritten:
- Bereitstellen eines länglichen Folienbands (20);
- Einbringen von flüssigem, nicht ausgehärteten Schaummaterial (21) auf das Folienband (20);
- Umbiegen des Folienbands (20) quer zur Längsrichtung des Folienbands (20), um einen Folienschlauch auszubilden;
- Pressen des Folienschlauchs mit einem Pressstempel (24), so dass an den Befestigungsabschnitten (2) und an der Soll-Biegestelle (4) übereinanderliegende Folienabschnitte miteinander verbunden, insbesondere verschweißt werden und sich das Schaummaterial (21) vor dem Aushärten in benachbarten Kammern (6) sammelt, um die Dichtabschnitte (3) auszubilden.

11. Verfahren nach Anspruch 10, wobei das Pressen des Folienschlauchs so ausgeführt wird, dass an den Befestigungsabschnitten (2) zwischen den Folienabschnitten eine Schicht des Schaummaterials verbleibt, um die Befestigungsabschnitte (2) zu verstärken und/oder zu verkleben.

12. Verfahren zur Herstellung eines Dichtungsstreifens (1), insbesondere eines Dichtungsstreifens (1) nach einem der Ansprüche 1 bis 8, mit folgenden Schritten:
- Bereitstellen eines länglichen ersten Folienbands (31) in einem Formstempel (32) mit zueinander benachbarten Vertiefungen (33);
- Aufbringen von flüssigem, nicht ausgehärteten Schaummaterial (34) in die Vertiefungen (33) des ersten Folienbandes (31);
- Anbringen eines zweiten Folienbands (35) auf das erste Folienband (31), so dass die Folienbänder (31, 35) an den Befestigungsabschnitten (2) und an der Soll-Biegestelle (4) miteinander verbunden werden und das Schaummaterial (34) in durch die Vertiefungen (33) gebildeten Kammern (6) eingeschlossen wird.
